# EUROPEAN PATENT APPLICATION

(11) **EP 4 486 018 A1**
(43) Date of publication of application: **01.01.2025**
(21) Application number: 23784223.2
(22) Date of filing: 31.03.2023
(51) Int. Cl.: H04W 52/02, H04W 76/28

(54) **NETWORK ENERGY SAVING METHOD AND COMMUNICATION APPARATUS**

(30) Priority: 06.04.2022 CN 202210357181
(71) Applicant: Huawei Technologies Co., Ltd., Shenzhen, Guangdong 518129 (CN)
(72) Inventor: ZENG, Yu, Shenzhen, Guangdong 518129 (CN); ZENG, Qinghai, Shenzhen, Guangdong 518129 (CN); GENG, Tingting, Shenzhen, Guangdong 518129 (CN)
(74) Representative: Grünecker Patent- und Rechtsanwälte PartG mbB
(86) International application number: PCT/CN2023/085466
(87) International publication number: WO 2023/193659

(57) **Abstract**

This application provides a network energy saving method and a communication apparatus. The network energy saving method includes: A first access network device receives first information from a terminal device, where the first information is used to assist the first access network device in adjusting a working status, and the working status includes a sleep mode or a receiving and demodulation state; and the first access network device determines, based on the first information, whether to adjust the working status of the first access network device. According to the network energy saving method, the first access network device can choose to enter the sleep mode based on the first information, to reduce power consumption of the first access network device, thereby reducing network energy consumption.

## Description

This application claims priority to Chinese Patent Application No. 202210357181.8, filed with the China National Intellectual Property Administration on April 6, 2022 and entitled "NETWORK ENERGY SAVING METHOD AND COMMUNICATION APPARATUS", which is incorporated herein by reference in its entirety.

### TECHNICAL FIELD

Embodiments of this application relate to the wireless communication field, and in particular, to a network energy saving method and a communication apparatus.

### BACKGROUND

To reduce energy consumption of a terminal device, a wake-up signal (wake-up signal, WUS) energy saving mechanism is proposed. In the WUS energy saving mechanism, when the terminal device does not need to monitor a physical downlink control channel (physical downlink control channel, PDCCH), the terminal device may enter a sleep mode (sleep mode); and when the terminal device needs to monitor the PDCCH, a base station may wake up (wake up) the terminal device from the sleep mode by using a downlink WUS. The terminal device is woken up on demand by using the downlink WUS, so that energy consumption of the terminal can be reduced, thereby reducing energy consumption of an entire communication network.

However, in a communication system, energy consumption of the terminal is far less than energy consumption of the base station side. How to reduce energy consumption of the base station to achieve a better energy saving effect of the communication network is an urgent problem to be resolved.

### SUMMARY

According to a network energy saving method and a communication apparatus that are provided in embodiments of this application, an access network device can adjust a working status of the access network device, to reduce energy consumption of a communication network while maintaining good communication quality.

According to a first aspect, an embodiment of this application provides a network energy saving method. In the method, a first access network device receives first information from a terminal device, where the first information is used to assist the first access network device in adjusting a working status, and the working status of the first access network device includes a sleep mode or a receiving and demodulation state; and the first access network device determines, based on the first information, whether to adjust the working status of the first access network device.

Based on the method provided in the first aspect, the access network device receives the first information, and uses the first information to assist in adjusting the working status of the access network device, so that the access network device can flexibly select an appropriate working status based on a status of communication with the terminal device, to reduce energy consumption of a communication network and maintain good communication quality.

In a possible implementation, the first access network device performs communication in a cell in a first frequency range, and the first access network device has an information receiving module used for a second frequency range. The information receiving module is configured to receive the first information sent in the second frequency range, and a frequency of the second frequency range is less than a frequency of the first frequency range. In this possible implementation, when a frequency range in which the terminal device sends the first information is inconsistent with an operating frequency range (or referred to as a communication frequency range) of the access network device, the terminal device may alternatively directly send the first information to the access network device. This avoids a waste of communication transmission resources while assisting the access network device in reducing power consumption.

In a possible implementation, the first access network device receives the first information from the terminal device through a second access network device, where the first access network device performs communication in a cell in a first frequency range, the second access network device performs communication in a cell in a second frequency range, and a frequency of the second frequency range is less than a frequency of the first frequency range. In this possible implementation, when a frequency range in which the terminal device sends the first information is inconsistent with an operating frequency range (or referred to as a communication frequency range) of the access network device, without changing a built-in module of the access network device, the terminal device may still assist, by using the first information, the access network device in energy saving. Therefore, a requirement on a capability of the first access network device is reduced, and universality of the network energy saving method can be improved.

In a possible implementation, the first access network device manages the cell in the first frequency range and a cell in the second frequency range, where the cell in the first frequency range corresponds to a first information receiving module, the cell in the second frequency range corresponds to a second information receiving module, and the frequency of the second frequency range is less than the frequency of the first frequency range. That a first access network device receives first information from a terminal device specifically includes: The first access network device receives the first information from the terminal device in the second information receiving module, and the second information receiving module sends the first information to the first information receiving module.

In a possible implementation, when the first access network device determines, based on the first information, to adjust the working status of the first access network device, the adjusting the working status of the first access network device includes any one of the following: The first access network device modifies the sleep mode of the first access network device based on the first information; the first access network device modifies the receiving and demodulation state of the first access network device based on the first information; the first access network device switches from the receiving and demodulation state to the sleep mode based on the first information; or the first access network device switches from the sleep mode to the receiving and demodulation state based on the first information.

In a possible implementation, the first access network device sends configuration information to the terminal device, where the configuration information is used to configure a configured grant (configured grant, CG) resource for uplink transmission. Further, before a time domain location of the to-be-used CG resource of the terminal device arrives, the first access network device receives the first information from the terminal device. In this possible implementation, before the time domain location of the to-be-used CG resource arrives, the terminal device may assist, by using the first information, the access network device in adjusting the working status on the to-be-used CG resource, and the access network device can perform energy saving by using the CG resource as a granularity, so that a sleep time can be more flexibly and accurately determined, and an energy saving effect is improved.

In a possible implementation, the first access network device receives indication information from the terminal device, where the indication information indicates a first time-frequency resource, and the first time-frequency resource is a time-frequency resource that is in the to-be-used CG resource and that is used by the terminal device to perform uplink transmission.

In a possible implementation, when the first access network device is in the receiving and demodulation state, the first access network device performs uplink monitoring on the terminal device on the first time-frequency resource. In this possible implementation, the access network device may perform energy saving by using a time-frequency resource as a granularity, to implement an energy saving manner with a finer granularity than the CG resource and implement more refined energy saving, so that an energy saving effect is improved.

In a possible implementation, the indication information includes one or more of the following information: an identifier of the terminal device, an identifier of the to-be-used CG resource, a time domain resource range corresponding to to-be-transmitted uplink data, or a frequency domain resource range corresponding to the to-be-transmitted uplink data.

In a possible implementation, the configured CG resource includes a second time-frequency resource other than the first time-frequency resource. The first access network device receives an uplink signal on the second time-frequency resource, and skips demodulating the uplink signal received on the second time-frequency resource; or the first access network device skips receiving an uplink signal on the second time-frequency resource. In this possible implementation, the access network device may perform energy saving by receiving the uplink signal on the second time domain resource but skipping demodulating the uplink signal, or perform energy saving by skipping receiving the uplink signal on the second time domain resource, so that the access network device can select, based on a requirement of the access network device, a more appropriate energy saving manner, to improve an energy saving effect.

In a possible implementation, the first information indicates whether the terminal device uses the CG resource configured by the first access network device for the terminal device.

According to a second aspect, an embodiment of this application provides a network energy saving method. In the method, a terminal device determines first information, where the first information is used to assist a first access network device in adjusting a working status, and the working status of the first access network device includes a sleep mode or a receiving and demodulation state; and the terminal device sends the first information to the first access network device.

Based on the method provided in the second aspect, for beneficial effects of the method, refer to the beneficial effects of the method provided in the first aspect. Repeated content is not described again.

In a possible implementation, the first access network device performs communication in a cell in a first frequency range, and the first access network device has an information receiving module used for a second frequency range. The information receiving module is configured to receive the first information sent in the second frequency range, and a frequency of the second frequency range is less than a frequency of the first frequency range.

In a possible implementation, the terminal device sends the first information to the first access network device through a second access network device, where the first access network device performs communication in a cell in a first frequency range, the second access network device performs communication in a cell in a second frequency range, and a frequency of the second frequency range is less than a frequency of the first frequency range.

In a possible implementation, the adjusting the working status includes any one of the following: modifying the sleep mode, modifying the receiving and demodulation state, switching from the receiving and demodulation state to the sleep mode, or switching from the sleep mode to the receiving and demodulation state.

In a possible implementation, the terminal device receives configuration information from the first access network device, where the configuration information is used to configure a configured grant CG resource for uplink transmission. Before a time domain location of the configured CG resource arrives, the terminal device determines a to-be-used CG resource from the configured CG resource based on a data amount of to-be-transmitted uplink data. Further, before a time domain location of the to-be-used CG resource arrives, the terminal device sends the first information to the first access network device.

In a possible implementation, the terminal device determines a first time-frequency resource from the to-be-used CG resource based on the data amount of the to-be-transmitted uplink data, where the first time-frequency resource is a time-frequency resource that is in the to-be-used CG resource and that is used by the terminal device to perform uplink transmission; and the terminal device sends indication information to the first access network device, where the indication information indicates the first time-frequency resource.

In a possible implementation, the indication information includes one or more of the following information: an identifier of the terminal device, an identifier of the to-be-used CG resource, a time domain resource range corresponding to the to-be-transmitted uplink data, or a frequency domain resource range corresponding to the to-be-transmitted uplink data.

In a possible implementation, the configured CG resource includes a plurality of CG resources, the indication information includes a plurality of first bits, the first bits are in one-to-one correspondence with the CG resources, and the first bit indicates whether the corresponding CG resource is the to-be-used CG resource.

In a possible implementation, each first bit in the indication information further corresponds to a plurality of second bits, and the plurality of second bits indicate a range of a first time-frequency resource in a CG resource corresponding to the first bit.

According to a third aspect, this application provides a communication apparatus. The apparatus may be an apparatus in a first access network device, or an apparatus that can be used together with the first access network device. The communication apparatus may alternatively be a chip system. The communication apparatus may perform the method in the first aspect. A function of the communication apparatus may be implemented by hardware, or may be implemented by hardware executing corresponding software. The hardware or the software includes one or more units corresponding to the function. The unit may be software and/or hardware. For operations performed by the communication apparatus and beneficial effects thereof, refer to the method in the first aspect and the beneficial effects thereof. Repeated parts are not described again.

According to a fourth aspect, this application provides a communication apparatus. The apparatus may be an apparatus in a terminal device, or an apparatus that can be used together with the terminal device. The communication apparatus may alternatively be a chip system. The communication apparatus may perform the method in the second aspect. A function of the communication apparatus may be implemented by hardware, or may be implemented by hardware executing corresponding software. The hardware or the software includes one or more units corresponding to the function. The unit may be software and/or hardware. For operations performed by the communication apparatus and beneficial effects thereof, refer to the method in the second aspect and the beneficial effects thereof. Repeated parts are not described again.

According to a fifth aspect, this application provides a communication apparatus. The communication apparatus may be the first access network device in the foregoing method embodiments, or may be a chip disposed in the first access network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the first access network device in the foregoing method embodiments.

According to a sixth aspect, this application provides a communication apparatus. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a seventh aspect, this application provides a computer-readable storage medium. The computer-readable storage medium is configured to store computer-executable instructions. When the computer-executable instructions are executed, the method performed by the first access network device in the method according to the first aspect is implemented, or the method performed by the terminal device in the method according to the second aspect is implemented.

According to an eighth aspect, this application provides a computer program product including a computer program. When the computer program is executed, the method performed by the first access network device in the method according to the first aspect is implemented, or the method performed by the terminal device in the method according to the second aspect is implemented.

According to a ninth aspect, this application provides a communication system. The communication system includes a communication apparatus corresponding to the first access network device and a communication apparatus corresponding to the terminal device.

### BRIEF DESCRIPTION OF DRAWINGS

FIG. 1 is a diagram of a system architecture according to this application;
FIG. 2 is a diagram of an AI application framework in NR according to this application;
FIG. 3 is a schematic flowchart of a network energy saving method according to this application;
FIG. 4a is a diagram of a manner of sending first information according to this application;
FIG. 4b is a diagram of another manner of sending first information according to this application;
FIG. 4c is a diagram of still another manner of sending first information according to this application;
FIG. 4d is a diagram of still another manner of sending first information according to this application;
FIG. 5 is a schematic flowchart of another network energy saving method according to this application;
FIG. 6a is a diagram of a configured CG resource according to this application;
FIG. 6b is a diagram of a to-be-used CG resource according to this application;
FIG. 7 is a schematic flowchart of still another network energy saving method according to this application;
FIG. 8a is a diagram of indication information according to this application;
FIG. 8b is a diagram of another type of indication information according to this application;
FIG. 9 is a diagram in which configured CG resources overlap according to this application;
FIG. 10 is a diagram of a structure of a communication apparatus according to this application; and
FIG. 11 is a diagram of a structure of another communication apparatus according to this application.

### DESCRIPTION OF EMBODIMENTS

The following further describes specific embodiments of this application in detail with reference to accompanying drawings.

The terms "first", "second", and the like in the specification, claims, and accompanying drawings of this application are used to distinguish between different objects, and are not used to describe a particular sequence. In addition, the terms "including" and "having" and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"An embodiment" mentioned in this specification means that a particular feature, structure, or characteristic described with reference to the embodiment may be included in at least one embodiment of this application. The phrase shown in various locations in the specification does not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more. The term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a 4th generation (4th generation, 4G) communication system such as a long term evolution (long term evolution, LTE) system, an LTE frequency division duplex (frequency division duplex, FDD) system, an LTE time division duplex (time division duplex, TDD) system, a 5th generation (5th generation, 5G) communication system such as a new radio (new radio, NR) system, or a communication system evolved after 5G such as a 6th generation (6th generation, 6G) communication system.

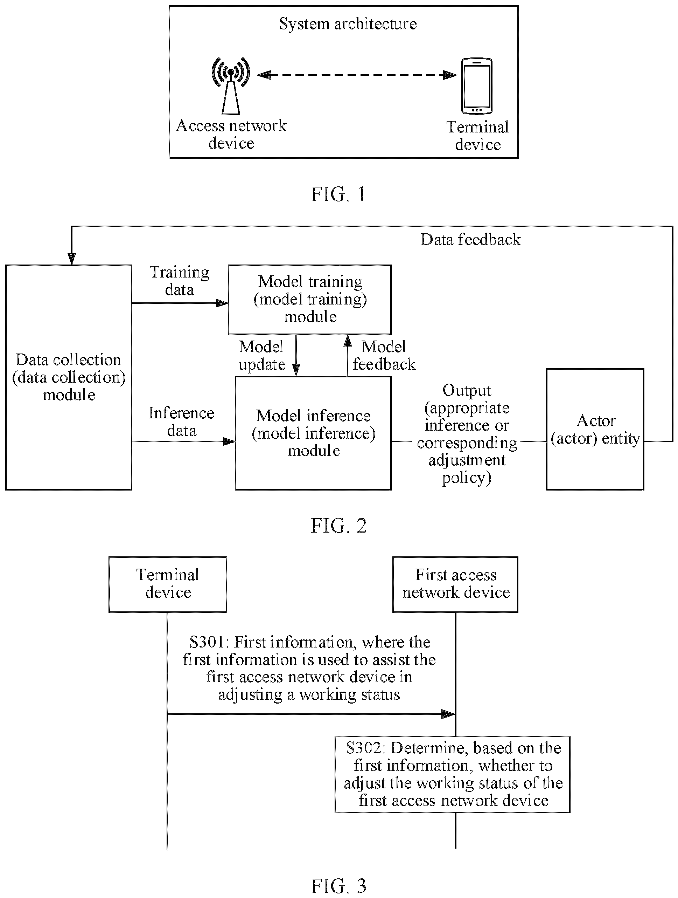

FIG. 1 is a diagram of a system architecture according to an embodiment of this application. The system architecture shown in FIG. 1 includes a terminal device and an access network device. The following describes in detail the terminal device and the access network device in the system architecture in FIG. 1.

### 1. Terminal device

The terminal device includes a device that provides voice and/or data connectivity for a user. For example, the terminal device is a device that has wireless sending and receiving functions, and may be deployed on land, including an indoor device or an outdoor device, a handheld device, a wearable device, or a vehicle-mounted device; or may be deployed on a water surface (for example, on a ship); or may be deployed in the air (for example, on an airplane, a balloon, or a satellite). The terminal device may be a mobile phone (mobile phone), a tablet computer (Pad), a computer having wireless sending and receiving functions, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a mobile station, a remote station, a remote terminal, a mobile device, a wireless communication device, or the like. The terminal may be fixed or movable. It may be understood that all or some functions of the terminal in this application may alternatively be implemented by using a software function running on hardware, or may be implemented by using an instantiated virtualization function on a platform (for example, a cloud platform).

### 2. Access network device

The access network device (which may also be referred to as a network device) is a node or a device that connects the terminal device to a wireless network, and an interface between the access network device and the terminal device may be a Uu interface (or referred to as an air interface). Certainly, in future communication, names of these interfaces may remain unchanged, or may be replaced by other names. This is not limited in this application.

The access network device may be any device having wireless sending and receiving functions, and includes but not limited to: a next generation NodeB (next generation NodeB, gNB) in a 5G communication system, an evolved NodeB (evolved NodeB, eNB), a next generation evolved NodeB (next generation eNB, ng-eNB), a wireless backhaul device, a radio network controller (radio network controller, RNC), a NodeB (NodeB, NB), a home NodeB ((home evolved NodeB, HeNB), or (home NodeB, HNB)), a baseband unit (baseband unit, BBU), a transmission reception point (transmission reception point, TRP), a transmission point (transmission point, TP), a mobile switching center, a device that undertakes a base station function in device-to-device (Device-to-Device, D2D), vehicle-to-everything (vehicle-to-everything, V2X), and machine-to-machine (machine-to-machine, M2M) communication, or the like. The access network device may further include a network device in a non-terrestrial network (non-terrestrial network, NTN) communication system, in other words, may be deployed on a high-altitude platform, a satellite, or the like. This is not specifically limited in embodiments of this application. In addition, the access network device may be a central unit (central unit, CU) and/or a distributed unit (distributed unit, DU). The CU and the DU each have some functions of the base station. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer.

It should be noted that, FIG. 1 is described by using only one terminal device and one access network device as an example, and this cannot be considered as a specific limitation on the technical solutions of this application. For example, the system architecture of this application may alternatively include a plurality of terminal devices and a plurality of access network devices.

For ease of understanding of content of the solutions, the following further explains and describes some terms in embodiments of this application, to facilitate understanding of a person skilled in the art.

### 1. Operating frequency range

The operating frequency range may also be referred to as a communication frequency range, and is specifically a frequency range of a radio resource used when a communication system is used to perform uplink and downlink data communication with the terminal device. In other words, an operating frequency range of an NR cell is a frequency range of a radio resource used when the NR cell performs uplink and downlink data communication with the terminal device by using an NR system. For example, according to 3GPP 38.104, the operating frequency range (frequency range, FR) of the NR cell includes FR1 and FR2, and frequency ranges of the FR1 and FR2 are shown in Table 1.

**Table 1**

| Frequency range designation | Corresponding frequency range |
|---|---|
| FR1 | 410 MHz-7125 MHz |
| FR2 | 24250 MHz-52600 MHz |

The FR1 frequency range is a frequency range ranging from 410 MHz to 7125 MHz, and is also referred to as a medium and low-frequency (or low-frequency) frequency range. The FR2 frequency range is a frequency range ranging from 24250 MHz to 52600 MHz, is also referred to as a high-frequency frequency range, and is usually also referred to as a millimeter wave (mmWave) frequency range. In the field of mobile communication, 24 GHz to 100 GHz is usually referred to as a 5G millimeter wave. According to an available millimeter wave spectrum range, 3GPP 38.104 specifies the FR2 frequency range used in 5G: n257 (26.5 GHz to 29.5 GHz), also referred to as a 28 GHz spectrum; n258 (24.25 GHz to 29.5 GHz), also referred to as a 26 GHz spectrum; n260 (37 GHz to 40 GHz), also referred to as a 39 GHz spectrum; and n261 (27.5 GHz to 28.5 GHz), also referred to as a 28 GHz sub-spectrum.

Usually, a cell working in the FR1 frequency range is referred to as a low-frequency cell, and a cell working in the FR2 frequency range is referred to as a high-frequency cell. Advantages of the low-frequency cell are wide coverage and strong signal penetration. An advantage of the high-frequency cell is high rate.

It should be known that, in this application, the operating frequency range of the NR cell is also described as a cell in a frequency range. For example, a cell in a first frequency range indicates that an operating frequency range of the cell is the first frequency range. This description is applicable throughout this specification.

### 2. Configured grant (configured grant, CG) resource

The CG resource is a resource preconfigured by using radio resource control (radio resource control, RRC) signaling, and does not need to be dynamically scheduled by using downlink control information (downlink control information, DCI), which may also be referred to as semi-persistent scheduling. In contrast, a dynamic scheduling (dynamic scheduling, DG) resource needs to be dynamically scheduled by using the DCI.

### 3. Artificial intelligence (artificial intelligence, AI)

The AI is a technology that simulates a human brain to perform complex computing. The AI can be applied to the NR system to improve network performance and user experience by intelligently collecting and analyzing data. FIG. 2 is a diagram of an AI application framework in the NR system.

In FIG. 2, a data collection (data collection) module is used as a database for Al model training and data analysis and inference, and is configured to collect and store data input from, for example, a gNB, a gNB-CU, a gNB-DU, UE, or another network entity. A model training (model training) module is configured to analyze training data provided by the data collection module, to obtain an optimal AI model. A model inference (model inference) module analyzes, based on the AI model obtained by the model training module, inference data provided by the data collection module, and outputs an inference result (including an appropriate inference of network running or guidance for the network to implement corresponding adjustment policies) to an actor (actor) entity. Further, the actor entity performs scheduling management on the network entity based on the inference result output by the model inference module, that is, the actor entity is configured to schedule a plurality of network entities including the execution body to perform an operation corresponding to the inference result. After the network entities in the communication network perform corresponding operations based on the inference result, a specific performance (which may be understood as data generated in an operation process of the network entities) of the communication network is collected and stored by the data collection module.

The following further describes, with reference to the accompanying drawings, a network energy saving method and a communication apparatus that are provided in this application.

FIG. 3 is a schematic flowchart of a network energy saving method according to an embodiment of this application. As shown in FIG. 3, an example in which the method is performed by a terminal device and a first access network device is used for description. It may be understood that the network energy saving method may alternatively be performed by a chip in the first access network device or a chip in the terminal device.

S301: The first access network device receives first information from the terminal device, where the first information is used to assist the first access network device in adjusting a working status. The working status of the first access network device includes a sleep mode or a receiving and demodulation state.

In other words, the terminal device determines the first information used to assist the first access network device in adjusting the working status, and then sends the first information to the first access network device, so that the first access network device can determine, based on the first information, whether to adjust the working status. When determining that the working status needs to be adjusted, the first access network device may further adjust the working status of the first access network device based on the first information. It should be noted that the access network device in the sleep mode skips receiving an uplink signal, or receives an uplink signal but skips demodulating the uplink signal. The access network device in the receiving and demodulation state may receive an uplink signal in a full frequency range (or a partial frequency range) and demodulate the uplink signal.

In a possible implementation, the first information indicates the first access network device to adjust the working status. The first information may include any one or more of an identifier of a target working status, an identifier of an adjustment operation, or a trigger character/field for adjusting the working status. It should be understood that the identifier of the target working status indicates a working status adjusted by the first access network device based on the first information; the identifier of the adjustment operation indicates a specific operation of adjusting to the target working status by the first access network device, for example, may include: switching from the sleep mode to the receiving and demodulation state, switching from the receiving and demodulation state to the sleep mode, modifying the sleep mode, or modifying the receiving and demodulation state; and the trigger character/field for adjusting the working status indicates the first access network device to switch from a current working status.

For example, if the first information includes an identifier 1 indicating a target working status, and the identifier 1 indicates that the target working status is the sleep mode, the first information indicates the first access network device to adjust to the sleep mode. If the first information includes an identifier 2 indicating an adjustment operation, and the adjustment operation indicated by the identifier 2 is switching from the receiving and demodulation state to the sleep mode, the first information indicates the first access network device to switch from the receiving and demodulation state to the sleep mode. If the first information includes a trigger character for adjusting a working status, when a current working status of the first access network device is the sleep mode, the first information indicates the first access network device to adjust from the sleep mode to the receiving and demodulation state; or when a current working status of the first access network device is the receiving and demodulation state, the first information indicates the first access network device to adjust from the receiving and demodulation state to the sleep mode.

With reference to a specific application scenario, the following describes in detail a manner in which the terminal device sends the first information to the first access network device (or referred to as a manner in which the first access network device receives the first information from the terminal device).

In an application scenario 1, a frequency range used by the terminal device to send the first information is the same as a communication frequency range of the first access network device.

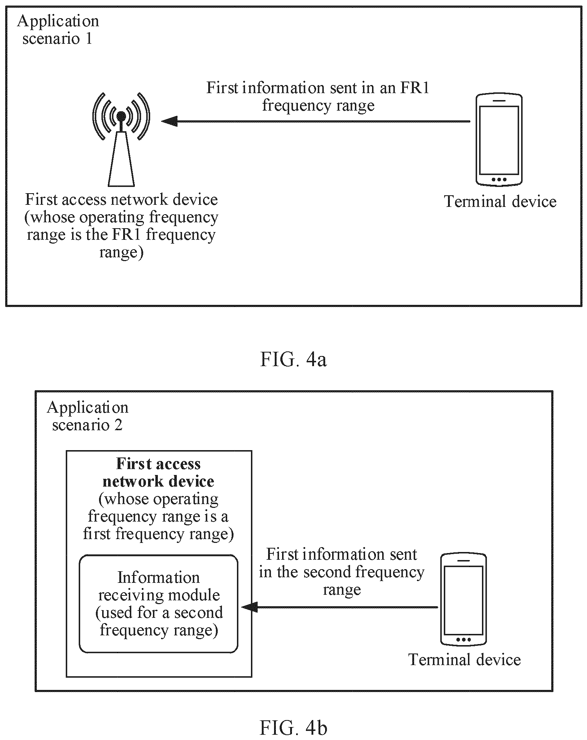

For example, refer to FIG. 4a. The first access network device performs communication in a cell in an FR1 frequency range, and the terminal device sends the first information in the FR1 frequency range. In this application scenario, the terminal device may directly send the first information to the first access network device.

In an application scenario 2, a frequency range used by the terminal device to send the first information is different from an operating frequency range of the first access network device. For example, the first access network device performs communication in a cell in a first frequency range. In other words, the first frequency range is an operating frequency range (or referred to as a communication frequency range) of the first access network device. The terminal device sends the first information in a second frequency range, where a frequency of the second frequency range is less than a frequency of the first frequency range. For example, the first frequency range is the FR2 frequency range, and the second frequency range is the FR1 frequency range. For descriptions of the FR1 frequency range and the FR2 frequency range, refer to the foregoing descriptions. Details are not described again.

In a possible implementation of the application scenario 2, the first access network device communicates with the terminal device in the cell in the first frequency range. Refer to FIG. 4b. The first access network device further has an information receiving module used for the second frequency range, and the information receiving module is configured to receive the first information sent by the terminal device in the second frequency range. In this case, as shown in FIG. 4b, the terminal device sends the first information in the second frequency range, and the first access network device may receive the first information by using the information receiving module used for the second frequency range. In this possible implementation, when the frequency range in which the terminal device sends the first information is inconsistent with the operating frequency range of the access network device, the terminal device may directly send the first information to the access network device, and the first information does not need to be forwarded by another access network device. In this way, the access network device can reduce power consumption and avoid a waste of communication transmission resources.

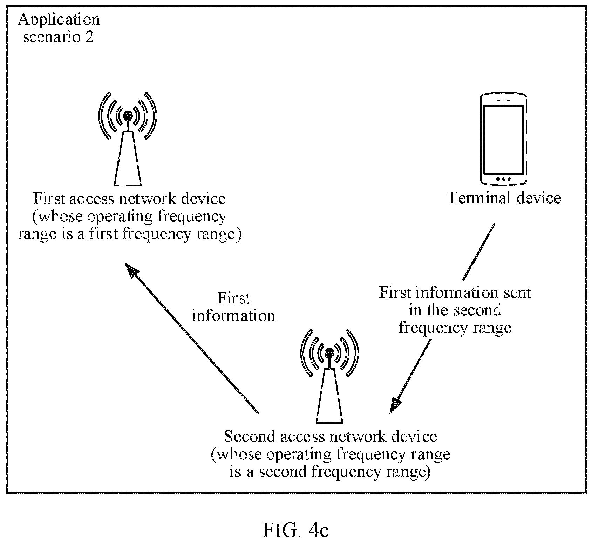

In another possible implementation of the application scenario 2, the first access network device performs communication in the cell in the first frequency range, and a second access network device performs communication in a cell in the second frequency range. In other words, an operating frequency range of the first access network device is the first frequency range, and an operating frequency range of the second access network device is the second frequency range. In this case, refer to FIG. 4c. The first access network device may receive the first information from the terminal device through the second access network device. For example, an operating frequency range of the first access network device is the FR2 frequency range, and an operating frequency range of the second access network device is the FR1 frequency range. When the terminal device sends the first information in the FR1 frequency range, the terminal device may send the first information to the first access network device through the second access network device.

In other words, the terminal device sends the first information to the second access network device in the second frequency range. Further, after receiving the first information, the second access network device may send the first information from the terminal device to the first access network device through an interface (for example, an X2 interface or an Xn interface) between base stations. In this possible implementation, when the frequency range in which the terminal device sends the first information is inconsistent with the operating frequency range of the access network device, without changing a built-in module of the access network device, the terminal device may still assist, by using the first information, the access network device in changing the working status. Therefore, a requirement on a capability of the access network device can be reduced, and universality of the network energy saving method is improved.

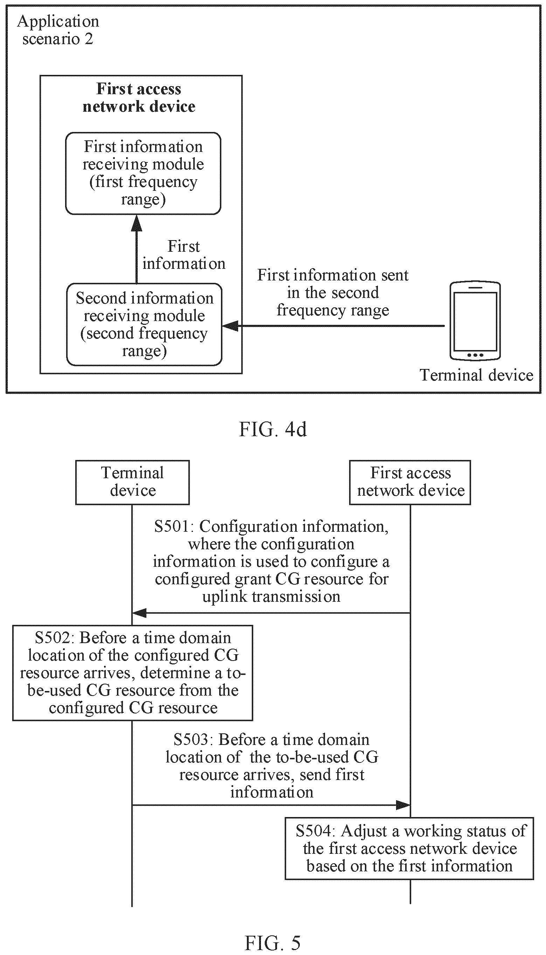

In still another possible implementation of the application scenario 2, the first access network device manages the cell in the first frequency range and a cell in the second frequency range. In other words, in addition to performing communication in the cell in the first frequency range, the first access network device may also perform communication in the cell in the second frequency range. Both the first frequency range and the second frequency range may be used as operating frequency ranges of the first access network device. Refer to FIG. 4d. The first access network device includes a first information receiving module and a second information receiving module. The cell in the first frequency range corresponds to the first information receiving module, and the cell in the second frequency range corresponds to the second information receiving module. In this case, when the terminal device sends the first information in the second frequency range, the first access network device may receive the first information from the terminal device through the second information receiving module, and then the second information receiving module sends the first information to the first information receiving module.

It should be understood that FIG. 4d may be understood as an implementation in a scenario in which the first access network device and the second access network device are co-sited.

S302: The first access network device determines, based on the first information, whether to adjust the working status of the first access network device.

The first access network device may use the first information as reference information about whether to adjust the working status. It may be understood that an amount and a type of reference information based on which the first access network device determines to adjust the working status are not limited in this application. In other words, in addition to the first information, the first access network device may further use other reference information, for example, current load of the access network device, current energy consumption of the access network device, or an energy saving policy of an operator, to determine whether to adjust the working status.

For example, an energy saving policy of the operator for the first access network device is that the first access network device may be in the sleep mode from 01:00 a.m. to 08:00 a.m. every day, and is not allowed to be in the sleep mode in other time. In this case, the first access network device receives the first information from the terminal device at 12:00 a.m., and the first information indicates the first access network device to switch from the receiving and demodulation state to the sleep mode. In this case, the first access network device determines, according to the energy saving policy of the operator, not to adjust the working status of the first access network device. In an implementation, when the first access network device determines, based on the first information, to adjust the working status of the first access network device, the first access network device may further determine, based on the first information, how to adjust the working status of the first access network device. It should be known that the adjusting the working status mentioned in this application includes: modifying the sleep mode, modifying the receiving and demodulation state, switching from the sleep mode to the receiving and demodulation state, or switching from the receiving and demodulation state to the sleep mode. To be specific, after determining, based on the first information, to adjust the working status of the first access network device, the first access network device may perform any one of the following operations.

Operation 1: The first access network device may modify the sleep mode based on the first information.

For example, the first information includes the identifier of the adjustment operation, and the identifier of the adjustment operation indicates to modify the sleep mode, so that the first access network device may modify the sleep mode based on a requirement of the first access network device. The modifying the sleep mode includes: modifying an energy saving level corresponding to the sleep mode or modifying a sleep manner corresponding to the sleep mode.

For example, the sleep mode includes sleep modes of a plurality of energy saving levels, and the sleep modes of the energy saving levels correspond to different sleep manners. For example, the energy saving level of the sleep mode includes an energy saving level 1 and an energy saving level 2, where the energy saving level 1 corresponds to a sleep manner 1, and the energy saving level 2 corresponds to a sleep manner 2. The sleep manner 1 is: receiving an uplink signal but skipping demodulating the uplink signal; and the sleep manner 2 is: neither receiving an uplink signal nor demodulating the uplink signal. It can be learned that more energy consumption can be saved at the energy saving level 2 than at the energy saving level 1. In this case, if the first information indicates the first access network device to modify the sleep mode, the first access network device may determine, based on the requirement of the first access network device, an appropriate energy saving level or sleep manner. For example, if the first access network device needs to perform full frequency range reception, an adjusted sleep mode of the first access network device is a sleep mode corresponding to the energy saving level 1 or the sleep manner 1. If the first access network device does not need to perform full frequency range reception, or an optimal energy saving effect is needed, an adjusted sleep mode of the first access network device is a sleep mode corresponding to the energy saving level 2 or the sleep manner 2.

Operation 2: The first access network device may modify the receiving and demodulation state based on the first information.

For example, the first information includes the identifier of the adjustment operation, and the identifier of the adjustment operation is modifying the receiving and demodulation state, so that the first access network device may modify the receiving and demodulation state based on a requirement of the first access network device. The modifying the receiving and demodulation state includes: modifying a frequency range corresponding to a received and demodulated uplink signal.

For example, the modifying the frequency range corresponding to the received and demodulated uplink signal includes: changing from a full frequency range to a partial frequency range, or changing from a partial frequency range to a full frequency range. If the first information indicates the first access network device to modify the receiving and demodulation state, the first access network device may determine, based on a requirement of the first access network device, an appropriate frequency range corresponding to a received and demodulated uplink signal. For example, if the first access network device needs to perform full frequency range reception, an adjusted receiving and demodulation state of the first access network device is a receiving and demodulation state for the full frequency range reception. If the first access network device does not need to perform full frequency range reception, or an optimal energy saving effect is needed, an adjusted receiving and demodulation state of the first access network device is a receiving and demodulation state for partial frequency range reception.

Operation 3: The first access network device may switch from the sleep mode to the receiving and demodulation state based on the first information.

For example, the first information includes the identifier of the adjustment operation, and the identifier of the adjustment operation is switching from the sleep mode to the receiving and demodulation state. Alternatively, the first information includes the identifier of the target working status, and the identifier of the target working status is the receiving and demodulation state.

For example, when the first access network device is in the sleep mode, the terminal device sends an uplink wake-up signal to the first access network device, where the uplink wake-up signal carries the first information, and the first information is used to wake up the first access network device from the sleep mode, so that the first access network device is in the receiving and demodulation state. The first information is an identifier of the receiving and demodulation state.

Operation 4: The first access network device may switch from the receiving and demodulation state to the sleep mode based on the first information.

For example, the first information includes the identifier of the adjustment operation, and the identifier of the adjustment operation is switching from the receiving and demodulation state to the sleep mode. Alternatively, the first information includes the identifier of the target working status, and the identifier of the target working status is the sleep mode.

For example, when the first access network device is in the receiving and demodulation state, the terminal device sends an uplink sleep signal to the first access network device, where the uplink sleep signal carries the first information, the first information indicates the first access network device to switch from the receiving and demodulation state to the sleep mode, and the first information is an identifier of the sleep mode.

In implementations of the operation 3 and the operation 4, the access network device may flexibly switch between the sleep mode and the receiving and demodulation state based on the first information, to achieve a good energy saving effect.

In conclusion, according to the network energy saving method shown in FIG. 3, the access network device receives the first information from the terminal device, and uses the first information to assist in adjusting the working status of the access network device, so that the access network device can flexibly select an appropriate working status based on a status of communication with the terminal device or a requirement of the access network device. This can reduce energy consumption of a communication network, maintain good communication quality, and achieve a balance between network energy saving and the communication quality.

The following further describes the network energy saving method provided in FIG. 3 by using a CG resource as an energy saving granularity. FIG. 5 is a schematic flowchart of a network energy saving method according to an embodiment of this application. As shown in FIG. 5, an example in which the method is performed by a terminal device and a first access network device is used for description. It may be understood that the network energy saving method may alternatively be performed by a chip in the first access network device or a chip in the terminal device.

S501: The first access network device sends configuration information to the terminal device, where the configuration information is used to configure a configured grant CG resource for uplink transmission.

Correspondingly, the terminal device receives the CG resource configured by the first access network device, and subsequently the terminal device may send uplink data to the first access network device by using the configured CG resource.

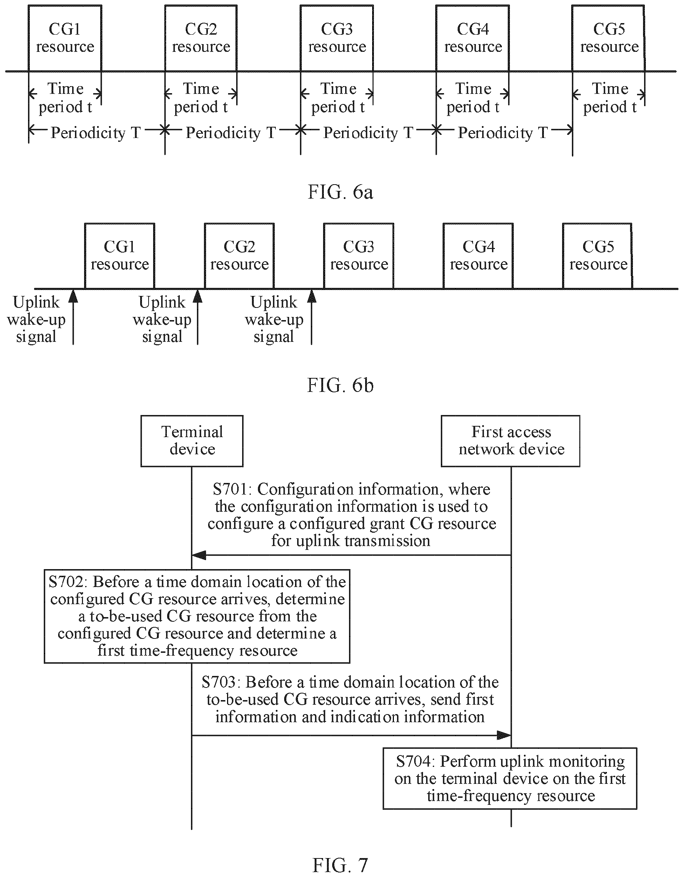

In a possible implementation, the CG resource configured by the first access network device is periodic. Specifically, the first access network device sends the configuration information to the terminal device. The configuration information indicates a size of a CG resource (or understood as a specific time-frequency resource range corresponding to the CG resource) and an occurrence periodicity of the CG resource (that is, a fixed time interval between CG resources). Based on the configuration information, the access network device may configure a plurality of CG resources for the terminal device at a time. For example, the first access network device sends the configuration information to the terminal device, where the configuration information is used to configure five CG resources for the terminal device. The configuration information indicates a size of a CG resource, and an occurrence periodicity of the CG resource is T. The terminal device may determine, based on the configuration information, the five CG resources: a CG1 resource, a CG2 resource, a CG3 resource, a CG4 resource, and a CG5 resource shown in FIG. 6a. It can be learned that, in this possible implementation, the first access network device may configure the plurality of CG resources at a time, to save communication resources and reduce power consumption.

In another possible implementation, the CG resource configured by the first access network device is aperiodic. Specifically, the first access network device sends the configuration information to the terminal device, where the configuration information indicates a size of the CG resource, and the configuration information is used to configure one CG resource for the terminal device.

S502: Before a time domain location of the configured CG resource arrives, the terminal device determines a to-be-used CG resource from the configured CG resource based on a data amount of to-be-transmitted uplink data.

It may be understood as that the first access network device configures one or more CG resources for the terminal device. In a possible implementation, before the time domain location of the configured CG resource arrives, the terminal device determines the to-be-used CG resource from the one or more configured CG resources based on the data amount of the to-be-transmitted uplink data. The to-be-used CG resource is a CG resource to be used by the terminal device to subsequently send the uplink data to the first access network device. The to-be-used CG resource may be some or all of the configured CG resources.

For example, the terminal device infers, based on an AI algorithm model and the data amount of the to-be-transmitted uplink data, a data transmission status of the terminal device in a subsequent first time period. The first time period may include a time period corresponding to the configured CG resource. When a plurality of CG resources are configured, the first time period may alternatively include time periods corresponding to all or some of the configured CG resources. Further, the terminal device determines, based on an inference result (that is, the data transmission status of the terminal device in the subsequent first time period), whether to send the uplink data on the configured CG resources. For each configured CG resource, if the terminal device determines to subsequently send the uplink data on the CG resource, the CG resource is a to-be-used CG resource. It should be noted that the AI algorithm model mentioned in this application includes but is not limited to one or more of a machine learning model, a neural network model, or a deep learning model.

In a specific example, the access network device configures a CG1 resource for the terminal device. Before a time domain location of the CG1 resource arrives, the terminal device determines, based on the AI algorithm model of the terminal device (or understood as an AI function of the terminal device), whether the terminal device subsequently sends uplink data in a time period corresponding to the CG1 resource (or understood as a time period corresponding to a time domain resource range of the CG1 resource). If the terminal device determines, based on the AI inference result, to subsequently send uplink data in the time period corresponding to the CG1 resource, the terminal device determines the CG1 resource as a to-be-used CG resource.

In another specific example, the CG resource configured by the access network device for the terminal device is periodic. As shown in FIG. 6a, the first access network device configures the CG1 resource to the CG5 resource for the terminal device. The terminal device determines, based on the AI algorithm model of the terminal device, whether the terminal device subsequently sends uplink data in time periods corresponding to the CG resources. If the terminal device determines that there is to-be-sent uplink data in time domain resource ranges of the CG1 resource, the CG3 resource, and the CG4 resource subsequently, the terminal device determines, from the configured five CG resources, the CG1 resource, the CG3 resource, and the CG4 resource as to-be-used CG resources.

Further, after the terminal device determines the to-be-used CG resource from the configured CG resource according to S502, and before the time domain location of the CG resource configured by the first access network device for the terminal device arrives, the terminal device may send an indication information to the first access network device, where the indication message indicates whether the terminal device uses the configured CG resource. In this case, the first access network device may determine, based on the indication message, a working status in each configured CG resource, or determine whether to adjust, based on the indication message, a working status in each configured CG resource. In a possible implementation, the indication information is the first information. In other words, in addition to assisting the first access network device in adjusting the working status, the first information further indicates whether the terminal device uses the configured CG resource. It may be understood as that the first information is used to assist the first access network device in adjusting the working status in the configured CG resource.

For example, the first access network device configures a CG resource for the terminal device, and the CG resource is used by the terminal device to perform uplink transmission subsequently. Further, the terminal device may send the first information to the first access network device before the time domain location of the configured CG resource arrives. When a current working status of the first access network device is a sleep mode, if the first information indicates that the terminal device does not use the configured CG resource, and the first information includes an identifier of a target working status that is an identifier of the sleep mode, the first access network device determines, on the configured CG resource, not to adjust the working status of the first access network device; or if the first information indicates that the terminal device uses the configured CG resource, and the first information includes an identifier of a target working status that is an identifier of a receiving and demodulation state, the first access network device adjusts, on the configured CG resource, the working status of the first access network device from the sleep mode to a receiving and demodulation state.

The following uses an example in which the first information assists the first access network device in adjusting the working status on the to-be-used CG resource to describe this solution. For details, refer to subsequent specific descriptions of S503 and S504.

S503: Before a time domain location of the to-be-used CG resource arrives, the first access network device receives the first information from the terminal device.

Because the terminal device determines to subsequently transmit uplink data on the to-be-used CG resource, the terminal device sends the first information to the access network device before the time domain location of the to-be-used CG resource arrives, where the first information is used to assist the first access network device in adjusting the working status on the to-be-used CG resource. Specifically, for an explanation of the first information, refer to related descriptions in S301. For example, the identifier of the target working status included in the first information is the identifier of the receiving and demodulation state. It may be understood as that the first information indicates that the working status of the first access network device on the to-be-used CG resource is the receiving and demodulation state, that is, the first access network device performs reception and demodulation on the to-be-used CG resource. For a manner in which the first access network device receives the first information from the terminal device, refer to related descriptions in S301.

In an example, as shown in FIG. 6b, the terminal device determines, from the configured CG1 resource to CG5 resource, the CG1 resource, the CG2 resource, and the CG3 resource as to-be-used CG resources of the terminal device. Further, the terminal device may send an uplink wake-up signal to the first access network device before time domain locations of the to-be-used CG resources (that is, the CG1 resource, the CG2 resource, and the CG3 resource) arrive. The uplink wake-up signal carries first information, and the first information indicates the first access network device to perform reception and demodulation on the CG1 resource. Specifically, the first information may be an indication character that occupies one or more bits in the uplink wake-up signal.

S504: The first access network device determines, based on the first information, whether to adjust the working status of the first access network device.

A current working status of the first access network device is a sleep mode, and an identifier of a target working status included in the first information is an identifier of a receiving and demodulation state. In this case, the first access network device determines to adjust the working status of the first access network device to the receiving and demodulation state on the to-be-used CG resource, and the first access network device is in the sleep mode on another configured CG resource (in another time period other than a time period corresponding to the to-be-used CG resource). In other words, the first access network device receives and demodulates an uplink signal on the to-be-used CG resource, and skips receiving or demodulating the uplink signal on another configured CG resource.

In a specific example, in the configured CG1 resource to CG5 resource, the CG1 resource, the CG2 resource, and the CG3 resource are to-be-used CG resources of the terminal device. In this case, in a time period corresponding to the CG1 resource, a time period corresponding to the CG2 resource, and a time period corresponding to the CG3 resource, the first access network device is in the receiving and demodulation state, that is, it may be understood as that the first access network device performs uplink monitoring on the CG1 resource, the CG2 resource, and the CG3 resource. The first access network device is in the sleep mode in a time period other than time periods corresponding to the to-be-used CG resources (that is, the CG1 resource, the CG2 resource, and the CG3 resource). In a time period corresponding to the CG4 resource and a time period corresponding to the CG5 resource, the first access network device may receive an uplink signal but skip demodulating the uplink signal, to achieve an energy saving effect. Alternatively, in the CG4 resource and the CG5 resource, the first access network device may neither receive an uplink signal nor demodulate the uplink signal, to achieve an energy saving effect.

In conclusion, according to the network energy saving method shown in FIG. 5, the access network device receives the first information from the terminal device, and uses the first information to assist in adjusting the working status of the access network device. When adjusting the working status, the access network device adjusts the working status by using a CG resource as a granularity, and can select an appropriate working status on each CG resource. Therefore, an energy saving effect can be improved by more flexibly and accurately determining a sleep time while maintaining good communication quality.

Usually, a size of a time domain resource and a size of a frequency domain resource in a CG resource configured by the first access network device for the terminal device are fixed. However, when the terminal device transmits uplink data on the CG resource, not all time domain resources and all frequency domain resources in the CG resource may be used. If the first access network device receives and demodulates an uplink signal on all time-frequency resources in the CG resource, a waste of power consumption is also caused. To further reduce the power consumption of the first access network device, this application further provides a network energy saving method. For a schematic flowchart of the method, refer to FIG. 7. FIG. 7 further describes the network energy saving methods provided in FIG. 3 and FIG. 5. As shown in FIG. 7, an example in which the method is performed by a terminal device and a first access network device is used for description. It may be understood that the network energy saving method may alternatively be performed by a chip in the first access network device or a chip in the terminal device.

S701: The first access network device sends configuration information to the terminal device, where the configuration information is used to configure a configured grant CG resource for uplink transmission.

For a specific implementation of S701, refer to descriptions of the specific implementation of S501.

S702: Before a time domain location of the configured CG resource arrives, the terminal device determines a to-be-used CG resource from the configured CG resource based on a data amount of to-be-transmitted uplink data, and determines a first time-frequency resource from the to-be-used CG resource.

The terminal device determines, based on the data amount of the to-be-transmitted uplink data, the to-be-used CG resource from the CG resource configured by the first access network device. For a specific implementation in which the terminal device determines the to-be-used CG resource from the configured CG resource, refer to descriptions of the specific implementation of S502. Further, the terminal device may determine a first time-frequency resource from the determined to-be-used CG resource based on the data amount of the to-be-transmitted uplink data, where the first time-frequency resource is a time-frequency resource that is in the to-be-used CG resource and that is subsequently used by the terminal device to perform uplink transmission.

For example, the access network device configures a CG1 resource for the terminal device. Before a time domain location of the CG1 resource arrives, the terminal device performs inference based on an AI algorithm model and the data amount of the to-be-transmitted uplink data. An inference result is: The CG1 resource is the to-be-used CG resource, and a first time-frequency resource that is of the CG1 resource and that the terminal device occupies during uplink transmission is 50% of a time domain resource in the CG1 resource and 62.5% of a frequency domain resource in the CG1 resource, where a start time domain location (or referred to as a start time point) of the 50% of the time domain resource is T, and a start frequency of the 62.5% of the frequency domain resource is P. In other words, the terminal device may not only determine whether the configured CG resource is the to-be-used CG resource, but also determine the first time-frequency resource specifically used in the to-be-used CG resource.

S703: Before a time domain location of the to-be-used CG resource arrives, the first access network device receives first information and indication information from the terminal device, where the indication information indicates the first time-frequency resource.

The indication information includes one or more of the following information: an identifier of the terminal device, an identifier of the to-be-used CG resource, a time domain resource range corresponding to the to-be-transmitted uplink data, a frequency domain resource range corresponding to the to-be-transmitted uplink data, a start time domain location corresponding to the to-be-transmitted uplink data, or a start frequency location corresponding to the to-be-transmitted uplink data. It should be understood that the configured CG resource may be associated with the identifier of the terminal device. When the first access network device configures CG resources for a plurality of terminal devices, the identifier of the terminal device indicates the to-be-used CG resource of the first access network device.

It should be noted that, in a possible implementation, the indication information may be included in the first information. For specific descriptions of the first information, refer to related content in embodiments of FIG. 3 and FIG. 5. In an example, the indication information and the first information may be same information. Specifically, if an identifier of a target working status included in the first information is a receiving and demodulation state, when the first access network device receives only the indication information indicating the first time domain resource, the first access network device may receive the first information by default, that is, adjust a status of the first access network device to the receiving and demodulation state on the first time domain resource by default. For example, the first access network device configures a CG1 resource for the terminal device, and before a time domain location of the CG1 resource arrives, the first access network device receives indication information sent by the terminal device. The indication information indicates that when the terminal device subsequently performs uplink transmission on the CG1 resource, 50% of a time domain resource in the CG1 resource is occupied. In this case, it may be understood as that the indication information has a function of the first information. To be specific, the indication information not only indicates the first time-frequency resource, but also indicates, by default, the first access network device to adjust the status of the first access network device to the receiving and demodulation state in a time period corresponding to the first time domain resource.

In another possible implementation, the indication information and the first information are carried in a same signal. For example, after the first access network device configures a CG1 resource for the terminal device, the first access network device is in a sleep mode. Before a time domain location of the CG1 resource arrives, the terminal device sends an uplink wake-up signal to the first access network device, where the uplink wake-up signal includes first information and indication information, and the first information indicates the first access network device to switch from the sleep mode to a receiving and demodulation state on the CG1 resource, so that the first access network device receives an uplink signal on the CG1 resource and demodulates the uplink signal. The indication information indicates that when the terminal device subsequently performs uplink transmission on the CG1 resource, 50% of the time domain resource in the CG1 resource is occupied.

After a function of the indication information is described, the following describes a specific indication form of the indication information as an example.

In a possible implementation, the indication information includes one or more first bits, the first bits are in one-to-one correspondence with the configured CG resources, and each first bit indicates whether a corresponding CG resource is the to-be-used CG resource. In other words, a quantity of first bits included in the indication information is the same as a quantity of the configured CG resources, the first bits are in one-to-one correspondence with the CG resources, and each first bit indicates whether a CG resource corresponding to the first bit is the to-be-used CG resource.

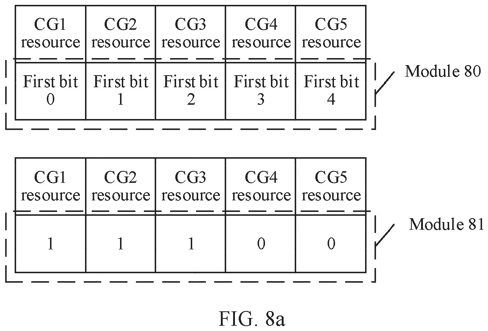

For example, the first access network device configures five CG resources for the terminal device: a CG1 resource, a CG2 resource, a CG3 resource, a CG4 resource, and a CG5 resource. Refer to FIG. 8a. A form of the indication information is shown in a module 80, and the indication information includes five first bits. The first bits are in one-to-one correspondence with the configured CG resources, and the first bit indicates, by using a value, whether a CG resource corresponding to the first bit is the to-be-used CG resource. In this example, when a value of the first bit is 1, it indicates that a CG resource corresponding to the first bit is a to-be-used CG resource. For example, when values of the first bits in the indication information are shown in a module 81 in FIG. 8a, the indication information indicates that the CG1 resource, the CG2 resource, and the CG3 resource are to-be-used CG resources.

In a possible implementation, the indication information includes one or more first bits, the first bits are in one-to-one correspondence with the configured CG resources, and each first bit indicates whether a corresponding CG resource is the to-be-used CG resource. Each first bit further corresponds to a plurality of second bits, and the plurality of second bits indicate a range of a first time-frequency resource in a CG resource corresponding to the first bit. In other words, a quantity of first bits included in the indication information is the same as a quantity of the configured CG resources, the first bits are in one-to-one correspondence with the CG resources, and each first bit corresponds to a plurality of second bits. Each first bit indicates whether a CG resource corresponding to the first bit is the to-be-used CG resource, and the plurality of second bits corresponding to each first bit indicate a range of a first time-frequency resource in the corresponding CG resource.

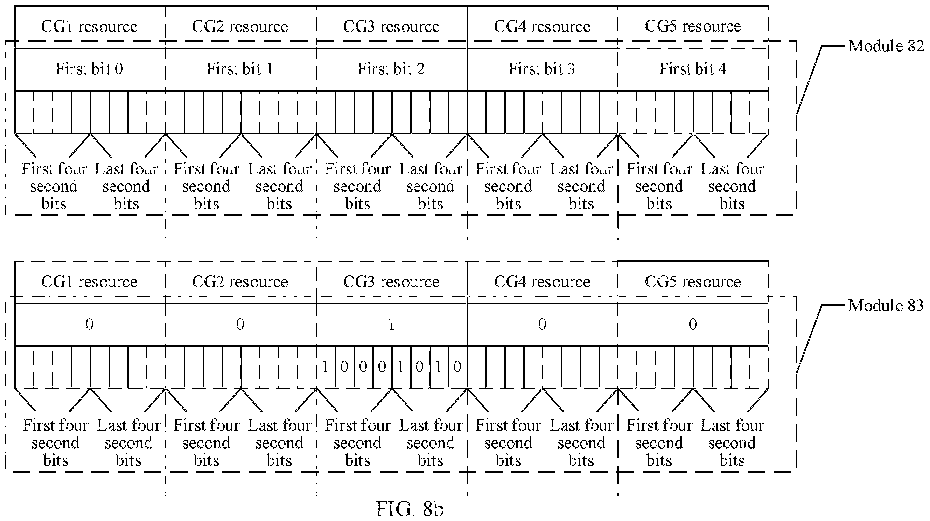

For example, the first access network device configures five CG resources for the terminal device: a CG1 resource, a CG2 resource, a CG3 resource, a CG4 resource, and a CG5 resource. Refer to FIG. 8b. A form of the indication information is shown in a module 82. The indication information includes five first bits, each first bit is in one-to-one correspondence with a CG resource, each first bit corresponds to eight second bits, first four second bits corresponding to each first bit indicate a time domain resource in a first time-frequency resource, and last four second bits indicate a frequency domain resource in the first time-frequency resource. The first bit indicates whether the CG resource corresponding to the first bit is a to-be-used CG resource, and eight second bits corresponding to the first bit indicate a range of a first time-frequency resource in the corresponding CG resource. In this example, when a value of the first bit is 1, it indicates that a CG resource corresponding to the first bit is a to-be-used CG resource. A ratio of a value of first four second bits (that is, a value obtained after conversion from binary to decimal) corresponding to the first bit to a maximum value of the four second bits (which may be understood as a corresponding decimal value when all the four second bits are 1, that is, 32) is a range of a time domain resource in the first time-frequency resource corresponding to the first bit. A calculation manner of a range of a frequency domain resource in the first time-frequency resource corresponding to the first bit is similar. For example, when values of the first bits and values of the second bits in the indication information are shown in a module 83 in FIG. 8b, the indication information indicates that the CG3 resource is a to-be-used CG resource. When the terminal device performs uplink transmission, 50% of a time domain resource and 62.5% of a frequency domain resource in the CG3 resource are occupied.

S704: The first access network device performs uplink monitoring on the terminal device on the first time-frequency resource.

After the first access network device receives the first information and the indication information from the terminal device, the first access network device determines, based on the first information, that the first access network device is in the receiving and demodulation state in a time period corresponding to the to-be-used CG resource, and the first access network device performs, based on the indication information, the uplink monitoring on the terminal device on the first time-frequency resource.

For example, the first access network device configures five CG resources for the terminal device: a CG1 resource, a CG2 resource, a CG3 resource, a CG4 resource, and a CG5 resource. The indication information indicates that the CG3 resource is a to-be-used CG resource, and when the terminal device performs uplink transmission, 50% of a time domain resource and 62.5% of a frequency domain resource in the CG3 resource are occupied. In this case, the first access network device receives an uplink signal on the 50% of the time domain resource and the 62.5% of the frequency domain resource in the CG3 resource, and demodulates the uplink signal.

In a possible implementation, the configured CG resource further includes a second time-frequency resource other than the first time-frequency resource. The first access network device receives an uplink signal on the second time-frequency resource, but skips demodulating the uplink signal received on the second time-frequency resource; or the first access network device skips receiving an uplink signal on the second time-frequency resource.

For example, the first access network device configures five CG resources for the terminal device: a CG1 resource, a CG2 resource, a CG3 resource, a CG4 resource, and a CG5 resource. The indication information indicates that the CG3 resource is a to-be-used CG resource, and when the terminal device performs uplink transmission, 50% of a time domain resource and 62.5% of a frequency domain resource in the CG3 resource are occupied. In this case, the second time-frequency resource includes the CG1 resource, the CG 2 resource, a time-frequency resource other than the first time-frequency resource in the CG 3 resource, the CG 4 resource, and the CG 5 resource. Further, if the first access network device is an access network device in a full frequency range receiving mode, the first access network device receives an uplink signal on the second time-frequency resource, but skips demodulating the uplink signal received on the second time-frequency resource. If the first access network device is an access network device in a partial frequency range receiving mode, the first access network device skips receiving an uplink signal on the second time-frequency resource.

In a possible implementation, the first access network device may infer, based on the first information and the indication information and with reference to a historical uplink data transmission status of the terminal device, a data transmission status of the terminal device in a subsequent time period based on an AI model algorithm. Further, the first access network device may configure, based on an AI model algorithm inference result, a CG resource for the terminal device.

In a possible implementation, when a plurality of terminal devices individually send first information and indication information to the first access network device, the first access network device may determine, based on the first information and the indication information that are sent by each terminal device, a CG resource on which receiving and demodulation needs to be performed or a first time-frequency resource in each CG resource on which receiving and demodulation needs to be performed.

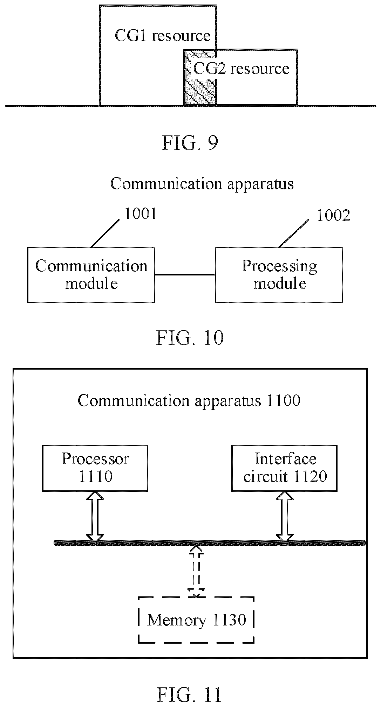

For example, when the first access network device configures a CG1 resource for a terminal device 1, and configures a CG2 resource for a terminal device 2, a time-frequency resource in the CG1 resource overlaps a time-frequency resource in the CG2 resource, as shown in FIG. 9. If the terminal device 1 determines that the CG1 resource is a to-be-used CG resource, and the terminal device 2 also determines that the CG2 resource is a to-be-used CG resource, the first access network device performs uplink monitoring on the CG1 resource and the CG2 resource. If the terminal device 1 determines that the CG1 resource is a to-be-used CG resource, and the terminal device 2 determines that the CG2 resource is not a to-be-used CG resource, the first access network device performs uplink monitoring on the CG1 resource. If the terminal device 1 determines that the CG1 resource is not a to-be-used CG resource, and the terminal device 2 determines that the CG2 resource is a to-be-used CG resource, the first access network device performs uplink monitoring on the CG2 resource.

In conclusion, according to the network energy saving method shown in FIG. 7, the access network device receives the first information from the terminal device, and uses the first information to assist in adjusting the working status of the access network device. Further, when adjusting the working status, the access network device adjusts the working status by using the first time-frequency resource in the CG resource as a granularity, and can select an appropriate working status on each first time-frequency resource. Therefore, an energy saving effect can be improved by more accurately determining a sleep time while maintaining good communication quality.

FIG. 10 is a diagram of a structure of a communication apparatus according to an embodiment of this application. The communication apparatus shown in FIG. 10 may be configured to implement some or all functions of the first access network device in embodiments corresponding to the network energy saving method, or the communication apparatus shown in FIG. 10 may be configured to implement some or all functions of the terminal device in embodiments corresponding to the network energy saving method, or the communication apparatus shown in FIG. 10 may be configured to implement some or all functions of the access network device in embodiments corresponding to the network energy saving method.

In an embodiment, the communication apparatus shown in FIG. 10 may be configured to implement some or all functions of the first access network device in the method embodiments described in any one of FIG. 3, FIG. 5, or FIG. 7. The apparatus may be a first access network device, or may be an apparatus in the first access network device, or may be an apparatus that can be used together with the first access network device. The communication apparatus may alternatively be a chip system. The communication apparatus shown in FIG. 10 may include a communication module 1001 and a processing module 1002.

The communication module 1001 is configured to receive first information from a terminal device, where the first information is used to assist the first access network device in adjusting a working status, and the working status of the first access network device includes a sleep mode or a receiving and demodulation state.

The processing module 1002 is configured to determine, based on the first information, whether to adjust the working status of the first access network device.

In a possible implementation, the first access network device performs communication in a cell in a first frequency range, and the first access network device has an information receiving module used for a second frequency range. The information receiving module is configured to receive the first information sent in the second frequency range, and a frequency of the second frequency range is less than a frequency of the first frequency range.

In a possible implementation, the communication module 1001 receives the first information from the terminal device through a second access network device, where the first access network device performs communication in a cell in a first frequency range, the second access network device performs communication in a cell in a second frequency range, and a frequency of the second frequency range is less than a frequency of the first frequency range.

In a possible implementation, when the processing module 1002 determines, based on the first information, to adjust the working status of the first access network device, the adjusting the working status of the first access network device includes any one of the following: modifying the sleep mode of the first access network device based on the first information; modifying the receiving and demodulation state of the first access network device based on the first information; switching from the receiving and demodulation state to the sleep mode based on the first information; or switching from the sleep mode to the receiving and demodulation state based on the first information.

In a possible implementation, the communication module 1001 sends configuration information to the terminal device, where the configuration information is used to configure a configured grant CG resource for uplink transmission. Before a time domain location of the to-be-used CG resource arrives, the communication module 1001 receives the first information from the terminal device.

In a possible implementation, the communication module 1001 receives indication information from the terminal device, where the indication information indicates a first time-frequency resource, and the first time-frequency resource is a time-frequency resource that is in the to-be-used CG resource and that is used by the terminal device to perform uplink transmission.

In a possible implementation, when the first access network device is in the receiving and demodulation state, the processing module 1002 performs uplink monitoring on the terminal device on the first time-frequency resource.

In a possible implementation, the indication information includes one or more of the following information: an identifier of the terminal device, an identifier of the to-be-used CG resource, a time domain resource range corresponding to to-be-transmitted uplink data, or a frequency domain resource range corresponding to the to-be-transmitted uplink data.

In a possible implementation, the configured CG resource includes a second time-frequency resource other than the first time-frequency resource. The communication module 1001 receives an uplink signal on the second time-frequency resource, and skips demodulating the uplink signal received on the second time-frequency resource; or the communication module 1001 skips receiving an uplink signal on the second time-frequency resource.

In a possible implementation, the first information indicates whether the terminal device uses the CG resource configured by the first access network device for the terminal device.

For more detailed descriptions of the communication module 1001 and the processing module 1002, refer to related descriptions of the first access network device in the foregoing method embodiments. Details are not described herein again.

In an embodiment, the communication apparatus shown in FIG. 10 may be configured to implement some or all functions of the terminal device in the method embodiments described in any one of FIG. 3, FIG. 5, or FIG. 7. The apparatus may be a terminal device, an apparatus in the terminal device, or an apparatus that can be used together with the terminal device. The communication apparatus may alternatively be a chip system. The communication apparatus shown in FIG. 10 may include a communication module 1001 and a processing module 1002.

The processing module 1002 is configured to determine first information, where the first information is used to assist a first access network device in adjusting a working status, and the working status of the first access network device includes a sleep mode or a receiving and demodulation state.

The communication module 1001 is configured to send the first information to the first access network device.

In a possible implementation, the first access network device performs communication in a cell in a first frequency range, the first access network device has an information receiving module in a second frequency range, and a frequency of the second frequency range is less than a frequency of the first frequency range. The communication module 1001 sends, in the second frequency range, the first information to the information receiving module in the second frequency range.

In a possible implementation, the communication module 1001 sends the first information to the first access network device through a second access network device, where the first access network device performs communication in a cell in a first frequency range, the second access network device performs communication in a cell in a second frequency range, and a frequency of the second frequency range is less than a frequency of the first frequency range.

In a possible implementation, the adjusting the working status includes any one of the following: modifying the sleep mode, modifying the receiving and demodulation state, switching from the receiving and demodulation state to the sleep mode, or switching from the sleep mode to the receiving and demodulation state.

In a possible implementation, the communication module 1001 receives configuration information from the first access network device, where the configuration information is used to configure a configured grant CG resource for uplink transmission. Before a time domain location of the configured CG resource arrives, the processing module 1002 determines a to-be-used CG resource from the configured CG resource. Before a time domain location of the to-be-used CG resource arrives, the communication module 1001 sends the first information to the first access network device.

In a possible implementation, the processing module 1002 determines a first time-frequency resource from the to-be-used CG resource based on a data amount of to-be-transmitted uplink data, where the first time-frequency resource is a time-frequency resource that is in the to-be-used CG resource and that is used by the terminal device to perform uplink transmission; and the communication module 1001 sends indication information to the first access network device, where the indication information indicates the first time-frequency resource.

In a possible implementation, the indication information includes one or more of the following information: an identifier of the terminal device, an identifier of the to-be-used CG resource, a time domain resource range corresponding to the to-be-transmitted uplink data, or a frequency domain resource range corresponding to the to-be-transmitted uplink data.

In a possible implementation, the configured CG resource includes a plurality of CG resources, the indication information includes a plurality of first bits, the first bits are in one-to-one correspondence with the CG resources, and the first bit indicates whether the corresponding CG resource is the to-be-used CG resource.

In a possible implementation, each first bit in the indication information further corresponds to a plurality of second bits, and the plurality of second bits indicate a range of a first time-frequency resource in a CG resource corresponding to the first bit.

For more detailed descriptions of the communication module 1001 and the processing module 1002, refer to related descriptions of the terminal device in the foregoing method embodiments. Details are not described herein again.

FIG. 11 is a diagram of a structure of a communication apparatus 1100 according to this application. The communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to: store instructions executed by the processor 1110, store input data needed by the processor 1110 to run the instructions, or store data generated after the processor 1110 runs the instructions.

When the communication apparatus 1100 is configured to implement the method in the foregoing method embodiments, the processor 1110 may be configured to perform a function of the processing module 1002, and the interface circuit 1120 may be configured to perform a function of the communication module 1001.

When the communication apparatus is a chip used in a first access network device, the chip in the first access network device implements a function of the first access network device in the foregoing method embodiments. The first access network device receives information from another module (for example, a radio frequency module or an antenna) in the first access network device, where the information is sent by a terminal device to the first access network device; or the chip in the first access network device sends information to another module (for example, the radio frequency module or the antenna) in the first access network device, where the information is sent by the first access network device to the terminal device.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a first access network device or another network device to the terminal device; or the chip in the terminal device sends information to another module (for example, the radio frequency module or the antenna) in the terminal device, where the information is sent by the terminal device to the first access network device or the another network device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by the processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in the access network device or the terminal device. Certainly, the processor and the storage medium may alternatively exist in the first access network device or the terminal device as discrete components.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or the instructions are loaded and executed on a computer, all or some of the procedures or the functions in embodiments of this application are executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

An embodiment of this application further provides a computer-readable storage medium. The computer-readable storage medium stores computer-executable instructions, and when the computer-executable instructions are executed, the method performed by the terminal device or the access network device in the foregoing method embodiments is implemented.

An embodiment of this application further provides a computer program product. The computer program product includes a computer program, and when the computer program is executed, the method performed by the terminal device or the access network device in the foregoing method embodiments is implemented.

An embodiment of this application further provides a communication system. The communication system includes a terminal device or an access network device. The terminal device is configured to perform the method performed by the terminal device in the foregoing method embodiments. The access network device is configured to perform the method performed by the access network device in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by the person skilled in the art that embodiments described in this specification all belong to preferred embodiments, and the involved actions and modules are not necessarily required by this application.

Descriptions of the embodiments provided in this application may refer to each other, and descriptions of the embodiments have different focuses. For a part not described in detail in an embodiment, refer to related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited. Unless otherwise stated or there is a logic conflict, terms and/or descriptions in different embodiments are consistent and may be mutually referenced, and technical features in different embodiments may be combined based on an internal logical relationship thereof, to form a new embodiment. It should be understood that the term "and/or" in this specification describes only an association relationship between associated objects and represents that three relationships may exist. For example, A and/or B may represent the following three cases: Only A exists, both A and B exist, and only B exists.

It should be understood that, in embodiments of the present invention, "B corresponding to A" indicates that B is associated with A, and B can be determined based on A. However, it should be further understood that determining B based on A does not mean that B is determined based only on A. B may alternatively be determined based on A and/or other information.

"A plurality of" in embodiments of this application refers to two or more than two.

Descriptions such as "first" and "second" in embodiments of this application are merely used for illustration and distinguishing between described objects, do not represent a sequence or indicate a special limitation on a quantity of described objects in embodiments of this application, and do not constitute any limitation on embodiments of this application.

It can be understood that in embodiments of this application, the terminal and/or the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A network energy saving method, wherein the method comprises:
receiving, by a first access network device, first information from a terminal device, wherein the first information is used to assist the first access network device in adjusting a working status, and the working status comprises a sleep mode or a receiving and demodulation state; and
determining, by the first access network device based on the first information, whether to adjust the working status of the first access network device.

2. The method according to claim 1, wherein the first access network device performs communication in a cell in a first frequency range, the first access network device has an information receiving module used for a second frequency range, the information receiving module is configured to receive the first information sent in the second frequency range, and a frequency of the second frequency range is less than a frequency of the first frequency range.

3. The method according to claim 1, wherein the receiving, by a first access network device, first information from a terminal device comprises:
receiving, by the first access network device, the first information from the terminal device through a second access network device, wherein
the first access network device performs communication in a cell in a first frequency range, the second access network device performs communication in a cell in a second frequency range, and a frequency of the second frequency range is less than a frequency of the first frequency range.

4. The method according to any one of claims 1 to 3, wherein when the first access network device determines to adjust the working status of the first access network device,
the method further comprises any one of the following:
modifying, by the first access network device, the sleep mode of the first access network device based on the first information;
modifying, by the first access network device, the receiving and demodulation state of the first access network device based on the first information;
switching, by the first access network device, from the receiving and demodulation state to the sleep mode based on the first information; or
switching, by the first access network device, from the sleep mode to the receiving and demodulation state based on the first information.

5. The method according to any one of claims 1 to 4, wherein the method further comprises:
sending, by the first access network device, configuration information to the terminal device, wherein the configuration information is used to configure a configured grant CG resource for uplink transmission; and
the receiving, by a first access network device, first information from a terminal device comprises:
receiving, by the first access network device, the first information from the terminal device before a time domain location of the to-be-used CG resource of the terminal device arrives.

6. The method according to claim 5, wherein the method further comprises:
receiving, by the first access network device, indication information from the terminal device, wherein the indication information indicates a first time-frequency resource, and the first time-frequency resource is a time-frequency resource that is in the to-be-used CG resource and that is used by the terminal device to perform uplink transmission.

7. The method according to claim 6, wherein when the first access network device is in the receiving and demodulation state, the method further comprises:
performing, by the first access network device, uplink monitoring on the terminal device on the first time-frequency resource.

8. The method according to claim 6 or 7, wherein the indication information comprises one or more of the following information: an identifier of the terminal device, an identifier of the to-be-used CG resource, a time domain resource range corresponding to to-be-transmitted uplink data, or a frequency domain resource range corresponding to the to-be-transmitted uplink data.

9. The method according to any one of claims 6 to 8, wherein the configured CG resource comprises a second time-frequency resource other than the first time-frequency resource, and the method further comprises:
receiving, by the first access network device, an uplink signal on the second time-frequency resource, and skipping demodulating the uplink signal received on the second time-frequency resource; or
skipping receiving, by the first access network device, an uplink signal on the second time-frequency resource.

10. The method according to any one of claims 1 to 9, wherein the first information indicates whether the terminal device uses the CG resource configured by the first access network device for the terminal device.

11. The method according to claim 2, wherein the first access network device manages the cell in the first frequency range and a cell in the second frequency range, the cell in the first frequency range corresponds to a first information receiving module, the cell in the second frequency range corresponds to a second information receiving module, and the frequency of the second frequency range is less than the frequency of the first frequency range; and
the receiving, by a first access network device, first information from a terminal device comprises:
receiving, by the first access network device, the first information from the terminal device in the second information receiving module, and sending, by the second information receiving module, the first information to the first information receiving module.

12. A network energy saving method, wherein the method comprises:
determining, by a terminal device, first information, wherein the first information is used to assist a first access network device in adjusting a working status, and the working status comprises a sleep mode or a receiving and demodulation state; and
sending, by the terminal device, the first information to the first access network device.

13. The method according to claim 12, wherein the first access network device performs communication in a cell in a first frequency range, the first access network device has an information receiving module used for a second frequency range, the information receiving module is configured to receive the first information sent in the second frequency range, and a frequency of the second frequency range is less than a frequency of the first frequency range.

14. The method according to claim 12, wherein the sending, by the terminal device, the first information to the first access network device comprises:
sending, by the terminal device, the first information to the first access network device through a second access network device, wherein
the first access network device performs communication in a cell in a first frequency range, the second access network device performs communication in a cell in a second frequency range, and a frequency of the second frequency range is less than a frequency of the first frequency range.

15. The method according to any one of claims 12 to 14, wherein the adjusting a working status comprises any one of the following: modifying the sleep mode, modifying the receiving and demodulation state, switching from the receiving and demodulation state to the sleep mode, or switching from the sleep mode to the receiving and demodulation state.

16. The method according to any one of claims 12 to 15, wherein before the sending, by the terminal device, the first information to the first access network device, the method further comprises:
receiving, by the terminal device, configuration information from the first access network device, wherein the configuration information is used to configure a configured grant CG resource for uplink transmission; and
before a time domain location of the configured CG resource arrives, determining, by the terminal device, a to-be-used CG resource from the configured CG resource based on a data amount of to-be-transmitted uplink data; and
the sending, by the terminal device, the first information to the first access network device comprises:
before a time domain location of the to-be-used CG resource arrives, sending, by the terminal device, the first information to the first access network device.

17. The method according to claim 16, wherein the method further comprises:
determining, by the terminal device, a first time-frequency resource from the to-be-used CG resource based on the data amount of the to-be-transmitted uplink data, wherein the first time-frequency resource is a time-frequency resource that is in the to-be-used CG resource and that is used by the terminal device to perform uplink transmission; and
sending, by the terminal device, indication information to the first access network device, wherein the indication information indicates the first time-frequency resource.

18. The method according to claim 17, wherein the indication information comprises one or more of the following information: an identifier of the terminal device, an identifier of the to-be-used CG resource, a time domain resource range corresponding to the to-be-transmitted uplink data, or a frequency domain resource range corresponding to the to-be-transmitted uplink data.

19. The method according to claim 17 or 18, wherein the configured CG resource comprises a plurality of CG resources, the indication information comprises a plurality of first bits, the first bits are in one-to-one correspondence with the CG resources, and the first bit indicates whether the corresponding CG resource is the to-be-used CG resource.

20. The method according to claim 19, wherein each first bit in the indication information further corresponds to a plurality of second bits, and the plurality of second bits indicate a range of a first time-frequency resource in a CG resource corresponding to the first bit.

21. The method according to any one of claims 12 to 20, wherein the first access network device is configured to manage the cell in the first frequency range and the cell in the second frequency range, the cell in the first frequency range corresponds to a first information receiving module, the cell in the second frequency range corresponds to a second information receiving module, and the frequency of the second frequency range is less than the frequency of the first frequency range.

22. A communication apparatus, comprising a module or a unit configured to perform the method according to any one of claims 1 to 11.

23. A communication apparatus, comprising a module or a unit configured to perform the method according to any one of claims 12 to 21.

24. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11 or claims 12 to 21 by using a logic circuit or executing code instructions.

25. A communication system, comprising a first access network device and a terminal device, wherein the first access network device is configured to perform the method according to any one of claims 1 to 11, and the terminal device is configured to perform the method according to any one of claims 12 to 21.

26. A computer-readable storage medium, wherein the storage medium stores a computer program or instructions, and when the computer program or the instructions are executed by a communication apparatus, the method according to any one of claims 1 to 11 or claims 12 to 21 is implemented.

27. A computer program product, wherein when a computer reads and executes the computer program product, the computer is enabled to perform the method according to any one of claims 1 to 11 or claims 12 to 21.
